# EUROPEAN PATENT SPECIFICATION

(11) **EP 2 825 480 B1**
(45) Date of publication and mention of the grant of the patent: **10.08.2016**
(21) Application number: 12714043.2
(22) Date of filing: 12.03.2012
(51) Int. Cl.: B65D 81/34

(54) **PACKAGING HAVING FIELD MODIFIERS FOR IMPROVED MICROWAVE HEATING OF CONE-SHAPED PRODUCTS**
VERPACKUNG MIT FELDMODIFIKATOREN ZUR VERBESSERTEN MIKROWELLENERWÄRMUNG VON KEGELFÖRMIGEN PRODUKTEN
CONDITIONNEMENT COMPORTANT DES MODIFICATEURS DE CHAMP PERMETTANT UN CHAUFFAGE AMÉLIORÉ PAR MICRO-ONDES DE PRODUITS EN FORME DE CÔNE

(43) Date of publication of application: 21.01.2015
(73) Proprietor: Coneinn Marketing, B.V., 1097 JB Amsterdam (NL)
(72) Inventor: CHOUIKHI, Sidi, Finedon Northamptonshire NN9 5HT (GB)
(74) Representative: Juncosa Miro, Jaime
(86) International application number: PCT/IB2012/000463
(87) International publication number: WO 2013/136102

(56) References cited:
- WO-A2-2005/068321
- GB-A- 2 199 235
- GB-A- 2 300 791
- US-A- 4 013 798
- US-A- 4 894 503
- US-A- 5 256 846
- US-A- 5 593 610
- US-A1- 2004 108 313

## Description

### Technical field

The present invention relates to a packaging having field modifying features to effect the slowing down of the heating of the lower parts and the periphery of the upper part of a filled dough-based cone while simultaneously enhancing the speed and quality of heating of middle parts of the cone and its filling.

The packaging of the present invention is useful to improve the quality of microwave re-heating and serving of frozen or refrigerated dough-based cones containing savoury or sweet fillings.

### Background art

Dough-based cones containing savoury or sweet fillings are well known in the art. They appear among other documents in the following patent documents: US 4313964, US 4463021, EP1844657, US 2006216387, WO2007138620 and US 2009/0095853.

Microwaves offer the advantage over conventional heating of significantly reduced heating times for frozen foods. However this advantage is often negated by the fact that when using standard board or plastic packaging the results from microwaves are often less than satisfactory, resulting in uneven heating with some parts of the products inadequately heated while other parts and in particular the edges of the product, are overheated with consequent reductions in quality.

Various approaches have been used over the years to overcome these problems. At the heart of these approaches has been the use of patches of metal film integrated into what might be termed as microwave "inert" packaging, e.g. board, plastics, etc. Metal films, e.g. commercially available aluminium foil of thickness > 4µm, reflect microwave almost totally. These types of metal films can be used in more or less complex design patches to modify local electric field patterns and/or partly or fully shield parts of the product from being subjected to microwaves.

The attempts at using metallized packaging to modify and control the heating of foods in microwave ovens date almost as far back as the use of microwaves to heat foods.

U.S. Patent No. 4,013,798 discloses the use of metallized packaging for shielding and the control of electric field patterns in foods, wherein the metallized packaging includes windows cut out in a metallized box to control the quantity of microwave coupling into multi component meals trays.

U.S. Patent No. 4,268,738 discloses metallized packaging having apertures distributed and sized to control the uniformity of microwave heating. It also discloses ways in which metallized packaging can be manufactured commercially.

U.S. Patent No. 4,656,325 discloses packaging designs using apertures in metallic containers to control microwave power coupling efficiency and uniformity of heating and the assumed mode of microwave propagation into and within the shielded containers. This document attempts to bring some fundamental understanding into the design of shielded packaging by beginning to consider metallized food containers as multi-mode cavities (in a similar way that microwave ovens are multi-mode cavities) and to use the container dimensions and the positions and sizes of apertures in the containers to control the microwave coupling efficiency and coupled power distribution within the foods.

U.S. Patent No. 4,990,735 discloses metallized packaging having apertures wherein the product height is used as a parameter in the design of shielded containers to maximise coupled power and enhance heating uniformity. In one embodiment, the metallized packaging comprises a round metal food container with apertures in the lid of the container to affect the coupled power distributions.

U.S. Patent No. 5,117,078 discuss the way in which elongated apertures in metal walls of containers cause microwave power distributions to be modified, suggesting that energy, which passes through the apertures produces intensive electric fields in parts of the product adjacent to the apertures and that the intensity reaching further into the product is considerably decreased by the shielding effect of the metal. It further proposes that the width of the aperture can be used to control the intensity of the surface heating and the proportion of microwave energy passing through the apertures into the foodstuffs. A method for constructing metallized packaging with apertures is also disclosed. The metallized packaging comprises a laminate of paperboard, aluminium foil and a heat resistant polymeric film. Two alternative embodiments are proposed for the manufacture of the three-ply laminate structures. In the first method the apertures are stamped out of the self-supporting aluminium foil and then the aluminium foil is laminated between the paperboard substrate and the protective polymeric film. In the second and preferred method the aluminium foil is laminated onto the polymeric film, and the apertures are then formed by selective de-metallization using a chemical metal etching process.

U.S. Patent No. 6,102,281 discloses a method for constructing a partially shielded paperboard tray with a lid from a unitary blank. The all of the sides of the tray section of the pack are covered with a layer of aluminium foil. The aluminium layer in the base section of the tray has a large aperture.

U.S. Patent No. 6,204,492 discloses a packaging including sets of metallized patterns disposed on a substrate, wherein a gap between metallized segments is at least 1 mm to reduce the risk of arcing. The metallized patterns can be foil segments or high optical density evaporated metallic material. Each of the repeat patterns is arranged to define a perimeter equal to 0.5, 1, 1.5, and so on wavelength of the microwave oven. The dimensions of the perimeter of the foil patterns are selected to optimise the re-heating of the material by using In the design an oven wavelength that is based on the dielectric constant of the food to be heated. The perimeter pattern is repeated continuously on a microwave safe substrate to form an "abuse tolerant" packaging. The metallized patterns detailed in the pattern provide microwave shielding and focussing functionality when integrated into packaging for foods while remaining electrically safe for use in microwave ovens even in the absence of a food load in the container.

Document US 2004108313 A1 discloses a molded microwaveable frozen food container having a first section and a second section in which at least one of the sections includes an in-mold label. The in-mold label provides at least one of the sections with a susceptor zone. In one embodiment of the container, a first section of the container can include the in-mold label providing the susceptor zone and a second section of the container can Include the in-mold label providing a shielding zone. Alternatively, the first section can include a shielding zone and the second section can include the susceptor zone or three sections can be provided having a combination of shielding and susceptor zones.

Documents GB 2300781 A discloses a food package comprising an outer container made of cardboard within which an inner food container made of a heat-shrink material and containing food is housed. When the food package with the food therein is placed in a microwave oven and exposed to microwaves to heat the food, the heating makes the inner food container to shrink and thereby the internal volume of the inner food container Is reduced, so that any reduction in the level of the food in the inner food container as a result of the shrinkage of the food is reduced, or eliminated, or converted into an increase in level.

### Disclosure of the invention

The variability In the quality of re-heating of microwaveable meal solutions is often a key obstacle in the way of the wider take up and commercial success of these types of products. More specifically the re-heating of dough-based cone-shaped products containing savoury or sweet fillings presents particular challenges. These include the uneven heating of the product, the rapid overheating, drying and occasional burning of parts of the dough-based cone and the excessive heating of the filling around the top edge or edges while other parts of the filling remain cooler and require extended heating times to bring them to the desired end temperatures.

Experimental analysis of the re-heat characteristics of the dough-based cones containing savoury fillings clearly highlighted problems with the microwave re-heating performance of the products. Re-heating of the products in susceptor primary packaging and board or plastic secondary box packaging shows strong heating in the narrow section of the cone, slow heating in the central longitudinal parts of the product and strong heating around the periphery of the top of the products. IR Thermal imaging sequences showing the evolution of temperature profiles during re-heating are available from archive records.

The problems addressed by the invention comprise upgrading in the quality of re-heating of filled dough-based cones in microwave ovens, such as:
a) Improvements in the heating of the base of the dough-based cone (i.e. reduction of the excessive heating around the tip section of the cone).
b) Improvements in the heating of the mid-section of the dough-based cone and filling.
c) Improvements in the heating (i.e. slow down the heating) of the top rim of the dough-based cone and the periphery of the filling.
d) Improvements in the heating of the central area of the top of the filling (i.e. speeding-up of the heating of the filling central area).

Thus, the present invention contributes to improve the quality of the re-heating of both the dough-based cone and the filling.

According to a first aspect, the present invention provides a packaging according to claim 1 having field modifiers for improved microwave heating of cone-shaped products, said packaging comprising a plurality of wall panels forming a box-shaped container configured to contain a filled dough-based cone-shaped product, said wall panels comprising a substrate made of a microwave inert material and a plurality of shielding patches made of a microwave shielding material arranged on selected inner areas thereof. Said shielding patches comprise a first set of shielding patches located on said wall panels around a lower cone tip region of said filled dough-based cone-shaped product and configured to shield said lower cone tip region, and a second set of shielding patches located on the wall panels around an upper cone rim region of the filled dough-based cone-shaped product and configured to shield said upper cone rim region and enhance the heating of an exposed central top region of a filling of the filled dough-based cone-shaped product.

The shielding patches are intended for shielding parts of the product from excessive heating, moderating the electric field thereon and re-directing the balance of the available electric field toward the other parts of the product to enhance uniformity and speed of heating throughout the product. In an embodiment, said first and second sets of shielding patches comprise metallized labels adhered to an inner surface of said substrate. For example, the microwave inert material of which the substrate is made is selected from a group comprising paperboard material and plastic material, among others, and each of said metallized labels can comprise for example a layer of aluminium foil applied on the substrate, an inner layer of aluminium foil applied on the substrate and an outer thin layer made of a microwave inert material covering the aluminium foil, or an inner layer of aluminium foil sandwiched between two thin layer made of a microwave inert material.

The mentioned wall panels of the packaging comprise a plurality of side wall panels, at least one bottom wall panel and at least one top wall panel, and in an embodiment said first set of shielding patches comprises a plurality of lower side shielding patches, each substantially covering a lower region of one of the side wall panels adjacent said bottom wall panel, and said second set of shielding patches comprises a plurality of upper side shielding patches, each substantially covering an upper region of one of the side wall panels adjacent said top wall panel. Preferably, said lower side shielding patches and said upper side shielding patches leave narrow strip regions of the side wall panel adjacent the edges thereof uncovered.

In an embodiment, said first set of shielding patches comprises at least one bottom shielding patch covering at least a central region of said bottom wall panel. The bottom shielding patch is in general a solid single patch or can have a notch providing a gap surrounding at least part of slit of the bottom panel to allow a flap of the box to be slid in when assembling the box, or there can be two separate smaller patches with a spacing between them where said slit is located.

In a preferred embodiment, the side wall panels comprise a number of substantially rectangular side wall panels, and said bottom and top wall panels are substantially polygonal in shape and have a number of sides equal to the number of side wall panels. For example, the side wall panels can be substantially rectangular in shape and three or four in number, in which case the bottom and top wall panels are substantially triangular or square in shape, respectively. It is also within the scope of the present invention that the side wall panels comprise a single continuous surrounding substantially rectangular (i.e. cylindrical) side wall panel, and said bottom and top wall panels are substantially oval or circular in shape.

Optionally, a cone-shaped portion of the filled dough-based cone-shaped product is wrapped by a susceptor primary packaging and the packaging of the present invention is an outer secondary box packaging which contains the susceptor primary packaging and the filled dough-based cone-shaped product.

According to a second aspect, the present invention provides a unitary blank for making a packaging having field modifiers for improved microwave heating of cone-shaped products according to claim 10. Said unitary blank comprises a substrate made of a microwave inert material defining a plurality of wall panels connected to each other by score lines which can be folded to form a box-shaped container configured to contain a filled dough-based cone-shaped product, and a plurality of shielding patches made of a microwave shielding material arranged on selected inner areas of said wall panels. Said shielding patches of the unitary blank comprise a first set of shielding patches located on said wall panels to be positioned around a lower cone tip region of said filled dough-based cone-shaped product when the unitary blank is folded into said box-shaped container and configured to shield said lower cone tip region, and a second set of shielding patches located on the wall panels to be positioned around an upper cone rim region of the filled dough-based cone-shaped product when the unitary blank is folded into the box-shaped container and configured to shield said upper cone rim region and enhance the heating of an exposed central top region of a filling of the filled dough-based cone-shaped product.

In an embodiment, said first and second sets of shielding patches comprise metallized labels adhered to an inner surface of said substrate. In an embodiment, said microwave inert material of said substrate of the unitary blank is selected from a group comprising paperboard material and plastic material, among others, and each of said metallized labels comprises a layer of aluminium foil applied on the substrate, or an inner layer of aluminium foil applied on the substrate and an outer thin layer made of a microwave inert material covering the aluminium foil, or a layer of aluminium foil sandwiched between two layers of a microwave inert material.

In one embodiment, said wall panels of the unitary blank comprise a plurality of side wall panels or a continuous surrounding side wall panel, at least one bottom wall panel and at least one top wall panel, said first set of shielding patches comprises a plurality of lower side shielding patches, each substantially covering a lower region of one of the side wall panels adjacent said bottom wall panel, or distributed along said continuous surrounding side wall panel adjacent said bottom wall panel, and said second set of shielding patches comprises a plurality of upper side shielding patches, each substantially covering an upper region of one of the side wall panels adjacent said top wall panel, or distributed along the continuous surrounding side wall panel adjacent the top wall panel.

Preferably, said lower side shielding patches and said upper side shielding patches leave narrow strip regions of the side wall panel adjacent the edges thereof uncovered. In one embodiment, said first set of shielding patches comprises at least one bottom shielding patch covering at least a central region of said bottom wall panel. Optionally, the bottom wall panel comprises a slit and said bottom shielding patch comprises a notch surrounding at least part of said slit or two separated bottom shielding patch are provided leaving a gap therebetween at the area of the slit.

In an embodiment, the substrate of the unitary blank further defines at least one auxiliary bottom wall panel, at least one auxiliary top wall panel and a plurality of flaps, tongues and slits configured to interact to retain the unitary blank in the form of the box-shaped container once conveniently folded.

In an embodiment, the substrate of the unitary blank comprises successive short cuts defining an easy-to-open pull-strip running transversally to at least one of the side wall panels, for example below the upper side shielding patches.

In an embodiment, there are a number of substantially rectangular side wall panels, and said bottom and top wall panels are substantially polygonal in shape with a number of sides equal to the number of side wall panels. In another embodiment, there is a single substantially rectangular side wall panel, and said bottom and top wall panels are oval or circular in shape

### Brief description of the drawings

The above and other features and advantages will be better understood from the following detailed description of one exemplary embodiment with reference to the accompanying drawing, in which:
Fig. 1 is a perspective view of a packaging having field modifiers for improved microwave heating of cone-shaped products according to an embodiment of the first aspect of the present invention; and
Fig. 2 is a plan view of the inner face of a unitary blank according to an embodiment of the second aspect of the present invention, which is useful for making the packaging of Fig. 1.

### Detailed description of an exemplary embodiment

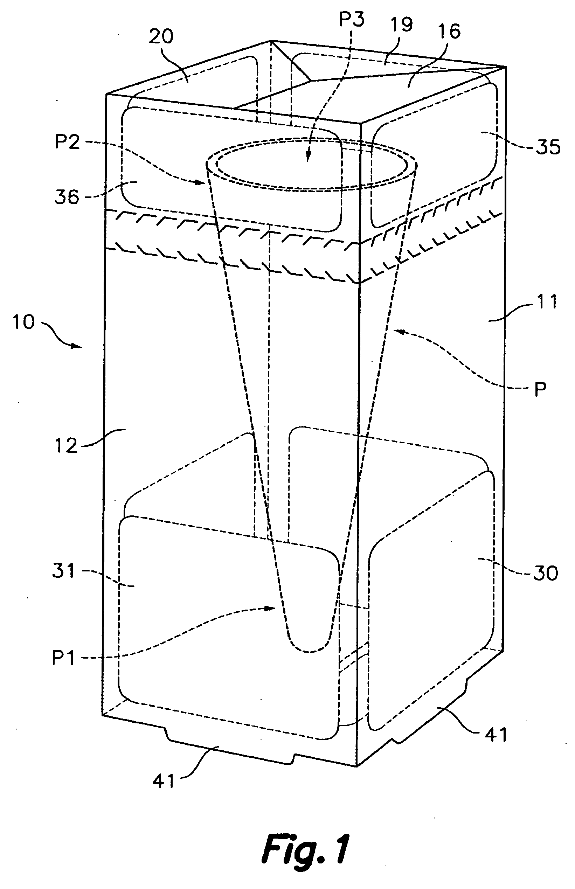

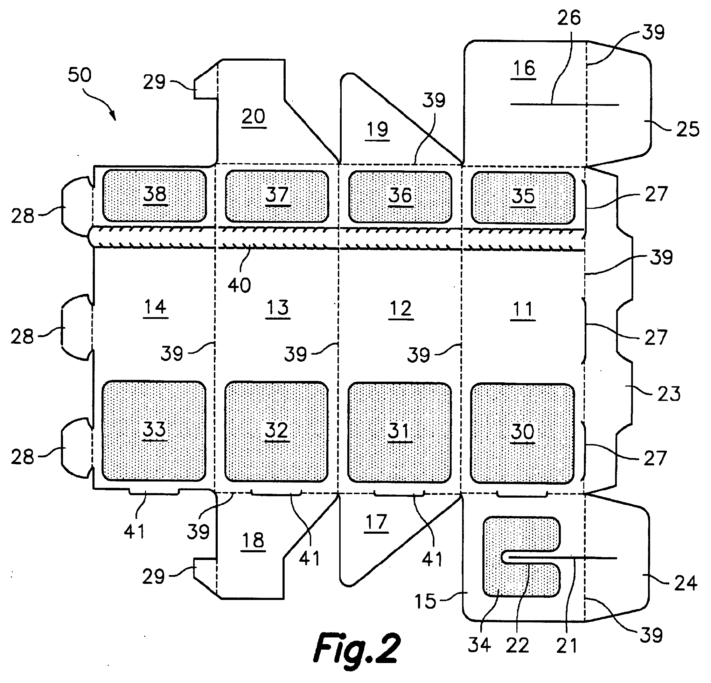

Referring first to Fig. 1, there is shown a packaging having field modifiers for improved microwave heating of cone-shaped products according to one embodiment of the first aspect of the present invention. The packaging of Fig. 1 comprises a plurality of wall panels 11-16 (see also Fig. 2) forming a box-shaped container 10 configured to contain a filled dough-based cone-shaped product P (depicted in dashed lines I Fig. 1) which has a lower cone tip region P1, an upper cone rim region P2 and a filling having an exposed central top region P3.

Fig. 2 shows a unitary blank 50 useful for making the box-shaped container 10 of Fig. 1. Said unitary blank 50 comprises a substrate made of a microwave inert material die-cut to define four substantially rectangular side wall panels 11-14, one substantially square bottom wall panel 15 and one substantially square top wall panel 16 connected to each other by score lines 39, and a plurality of shielding patches 30-38 made of a microwave shielding material arranged on selected inner areas of said side and bottom wall panels 11-15. The unitary blank 50 can be folded along the score lines 39 to form the box-shaped container 10 of Fig. 1. It is to be understood that a different number of side wall panels or wall panels having shapes other than those shown in Figs. 1 and 2 are also within the scope of the present invention.

The substrate of the unitary blank 50 is preferably made of paperboard although other materials, such as plastic or the like are also useful, and said shielding patches 30-38 are preferably metallized labels adhered to an inner surface of the substrate. Said metallized labels can comprise for example an inner layer of aluminium foil applied on the substrate and an outer thin layer made of a microwave inert material covering the aluminium foil.

The shielding patches 30-38 are distributed in a first set of shielding patches 30-34 and a second set of shielding patches 35-38. The first set of shielding patches 30-34 comprises a plurality of lower side shielding patches 30-33, each of which is shaped and arranged to substantially cover a lower region of one of the side wall panels 11-14 adjacent said bottom wall panel 15, but leaving narrow strip regions of the side wall panel 11-14 adjacent the edges thereof uncovered. The first set of shielding patches 30-34 further comprises one bottom shielding patch 34 covering at least a central region of said bottom wall panel 15. In the embodiment shown in Fig. 2, the bottom wall panel 15 comprises a slit 21 in a middle region thereof and said bottom shielding patch 34 comprises a notch 22 surrounding at least part of said slit 21 leaving narrow strip regions of the bottom wall panel adjacent the slit uncovered.

The second set of shielding patches 35-38 comprises a plurality of upper side shielding patches 35-38, each of which is located substantially covering an upper region of one of the side wall panels 11-14 adjacent said top wall panel 16, but leaving narrow strip regions of the side wall panel 11-14 adjacent the edges thereof uncovered. The lower side shielding patches 30-33 have a major size than the upper side shielding patches 35-38, and the top wall panel 16 is not covered by any shielding patch.

When the unitary blank 50 is conveniently folded along the score lines 39 to form the box-shaped container 10 of Fig. 1, the first set of shielding patches 30-34 are positioned around the lower cone tip region P1 of the filled dough-based cone-shaped product P, and the second set of shielding patches 35-38 are positioned around the upper cone rim region P2 of the filled dough-based cone-shaped product P. So, the first set of shielding patches 30-34 are configured to shield the lower cone tip region P1 and the second set of shielding patches 35-38 are configured to shield the upper cone rim region P2 when the filled dough-based cone-shaped product P located within the box-shaped container 10 is heated in a microwave oven.

In addition, as the middle region of the side wall panels 11-14 and the top wall panel 16 are not covered by any shielding patch, the shielding patches 30-38 act moderating the electric field thereon and re-directing the balance of the available electric field toward the other non-shielded parts of the product to enhance uniformity and speed of heating throughout the product. Thus, the packaging of the present invention provides for a reduction in in the heating of the lower cone tip region P1 and the upper cone rim region P2 and at the same time enhances the heating of the mid-section and the exposed central top region P3 of the filling of the filled dough-based cone-shaped product P.

As shown in Fig. 2, the substrate of the unitary blank 50 further defines first and second auxiliary bottom wall panels 17, 18, and first and second auxiliary top wall panels 19, 20, as well as a plurality of flaps 23, 24, 25, 29, tongues 28 and slits 21, 26, 27 configured to interact to retain the unitary blank 50 in the form of the box-shaped container 10 once the unitary blank 50 has been conveniently folded and assembled without the need of glue or other adhesive.

For example, side flap 23 is intended to be folded along the corresponding score line 39 and side tongues 28 are intended to be inserted in side slits 27, bottom and top flaps 24, 25 are intended to be folded along the corresponding score lines 39, the first auxiliary bottom and top wall panels 17, 19 are intended to be inserted in bottom and top slits 21, 26 of the bottom and top wall panels 15, 16 and auxiliary flaps 29 and part of the second auxiliary bottom and top wall panels 18, 20 are intended to be inserted between the corresponding bottom or top wall panel 15, 16 and first auxiliary bottom or top wall panel 17, 19.

Protrusions 41 extending from the bottom edge of the side wall panels 11-14 form four supporting feet for the box-shaped container 10.

The substrate unitary blank further comprises a pair of parallel rows of successive short cuts running transversally to the side wall panels 11-14 which define an easy-to-open pull-strip 40 for the box-shaped container 10. Alternatively the easy-to-open pull-strip 40 could extend only along one or along more than one of the side wall panels 11-14.

Modifications and variations to the shown and described embodiment will readily occur to one skilled in the art without departing from the scope of the present invention as defined in the attached claims.

## Claims

1. A packaging having field modifiers for improved microwave heating and a filled dough-based cone-shaped product contained in the packaging, said packaging comprising a plurality of wall panels (11-16) forming a box-shaped container (10) configured to contain said filled dough-based cone-shaped product (P), said wall panels (11-16) comprising a substrate made of a microwave inert material and a plurality of shielding patches (30-38) made of a microwave shielding material arranged on selected inner areas thereof, wherein said microwave inert material of said substrate is selected from a group comprising paperboard material and plastic material, **characterized in that** the filled dough-based cone-shaped product (P) comprises:
a lower cone tip region (P1);
an upper cone rim region (P2); and
a filling having an exposed central top region (P3), and **in that** said shielding patches (30-38) comprise:
a first set of shielding patches (30-34) located on said wall panels (11-15) around said lower cone tip region (P1) of the filled dough-based cone-shaped product (P) and providing a selected shield of the lower cone tip region (P1); and
a second set of shielding patches (35-38) located on the wall panels (11-14) around said upper cone rim region (P2) of the filled dough-based cone-shaped product (P) and providing a selected shield of the upper cone rim region (P2) and enhancing the heating of said exposed central top region (P3) of said filling of the filled dough-based cone-shaped product (P),
said first and second sets of shielding patches (30-34; 35-38) comprising metallized labels adhered to an inner surface of said substrate.

2. The packaging according to claim 1, wherein each of said metallized labels comprises at least one layer made of aluminium foil applied on the substrate, or an inner layer made of aluminium foil applied on the substrate and an outer thin layer made of a microwave inert material covering the aluminium foil, or an inner layer made of aluminium foil sandwiched between two thin layers made of a microwave inert material.

3. The packaging according to 1 or 2, wherein said wall panels (11-16) comprise a plurality of side wall panels (11-14) or a continuous surrounding side wall panel, at least one bottom wall panel (15) and at least one top wall panel (16), and wherein said first set of shielding patches (30-34) comprises a plurality of lower side shielding patches (30-33), each substantially covering a lower region of one of said side wall panels (11-14) adjacent said bottom wall panel (15), or distributed along a lower region of said continuous surrounding side wall panel adjacent said bottom wall panel (15), and said second set of shielding patches (35-38) comprises a plurality of upper side shielding patches (35-38), each substantially covering an upper region of one of the side wall panels (11-14) adjacent said top wall panel (16), or distributed along an upper region of said continuous surrounding side wall pane adjacent said top wall panel (16).

4. The packaging according to claim 3, wherein said lower side shielding patches (30-33) and said upper side shielding patches (35-38) leave narrow strip regions of the side wall panel (11-14) adjacent the edges thereof uncovered.

5. The packaging according to claim 3, wherein said first set of shielding patches (30-34) comprises at least one bottom shielding patch (34) covering at least a region of said bottom wall panel (15).

6. The packaging according to claim 5, wherein the bottom wall panel (15) comprises a slit (21) and said at least one bottom shielding patch (34) comprises a single bottom shielding patch (34) with a notch (22) surrounding at least part of said slit (21) or said at least one bottom shielding patch (34) comprises two bottom shielding patches leaving a spacing between them in the area of the slit.

7. The packaging according to any one of claims 3 to 6, wherein said side wall panels (11-14) comprise a number of substantially rectangular side wall panels, and said bottom and top wall panels (15, 16) are substantially polygonal in shape and have a number of sides equal to the number of side wall panels (11-14).

8. The packaging according to claim 7, wherein said side wall panels (11-14) are substantially rectangular in shape and three or four in number, and said bottom and top wall panels (15, 16) are substantially triangular or square in shape, respectively.

9. The packaging according to any one of claims 3 to 6, wherein said side wall panels (11-14) comprise a single continuous surrounding substantially rectangular side wall panel, and said bottom and top wall panels (15, 16) are substantially oval or circular in shape.

10. A unitary blank for making a packaging having field modifiers for improved microwave heating of cone-shaped products, said unitary blank (50) comprising a substrate made of a microwave inert material defining a plurality of wall panels (11-16) connected to each other by score lines which can be folded to form a box-shaped container (10) configured to contain a filled dough-based cone-shaped product (P), and a plurality of shielding patches (30-38) made of a microwave shielding material arranged on selected inner areas of said wall panels (11-15), wherein said microwave inert material of said substrate is selected from a group comprising paperboard material and plastic material, **characterized in that** said shielding patches (30-38) comprise:
a first set of shielding patches (30-34) located on said wall panels (11-15) to be positioned around a lower cone tip region (P1) of said filled dough-based cone-shaped product (P) when the unitary blank is folded into said box-shaped container (10) and the filled dough-based cone-shaped product (P) is housed in the box-shaped container (10) according to claim 1, and configured to shield said lower cone tip region (P1); and
a second set of shielding patches (35-38) located on the wall panels (11-14) to be positioned around an upper cone rim region (P2) of the filled dough-based cone-shaped product (P) when the unitary blank is folded into the box-shaped container (10) and the filled dough-based cone-shaped product (P) is housed in the box-shaped container (10) according to claim 1, and configured to shield said upper cone rim region (P2) and enhance the heating of an exposed central top region (P3) of a filling of the filled dough-based cone-shaped product (P),
said first and second sets of shielding patches (30-34; 35-38) comprising metallized labels adhered to an inner surface of said substrate.

11. The unitary blank according to claim 10, wherein said wall panels (11-16) comprise a plurality of side wall panels (11-14) or a continuous surrounding side wall panel, at least one bottom wall panel (15) and at least one top wall panel (16), and wherein said first set of shielding patches (30-34) comprises a plurality of lower side shielding patches (30-33), each substantially covering a lower region of one of said side wall panels (11-14) adjacent said bottom wall panel (15), or distributed along a lower region of said continuous surrounding side wall panel adjacent the bottom wall panel (15), and said second set of shielding patches (35-38) comprises a plurality of upper side shielding patches (35-38), each substantially covering an upper region of one of the side wall panels (11-14) adjacent said top wall panel (16), or distributed along an upper region of said continuous surrounding side wall pane adjacent said top wall panel (16).

12. The unitary blank according to claim 11, wherein said substrate further defines at least one auxiliary bottom wall panel (17, 18), at least one auxiliary top wall panel (19, 20) and a plurality of flaps (23, 24, 25, 29), tongues (28) and slits (21, 26, 27) configured to interact to retain the unitary blank (50) in the form of the box-shaped container (10) once conveniently folded.

13. The unitary blank according to claim 11, wherein said substrate comprises successive short cuts defining an easy-to-open pull-strip (40) running transversally to at least one of the side wall panels (11-14).

14. The unitary blank according to any one of claims 10 to 13, wherein said side wall panels (11-14) comprise a number of substantially rectangular side wall panels, and said bottom and top wall panels (15, 16) are substantially polygonal in shape and have a number of sides equal to the number of side wall panels (11-14).

15. The unitary blank according to any one of claims 10 to 13, wherein said side wall panels (11-14) comprise a single continuous surrounding substantially rectangular side wall panel, and said bottom and top wall panels (15, 16) are substantially oval or circular in shape.

## Patentansprüche

1. Verpackung mit Feldmodifikatoren zur verbesserten Mikrowellenerwärmung und gefülltes auf Teig basiertes kegelförmiges Produkt, das in der Verpackung enthalten ist, wobei die genannte Verpackung eine Vielzahl von Wandpaneelen (11-16) umfasst, welche einen quaderförmigen Container (10) bilden, welcher dazu ausgebildet ist, das genannte gefüllte auf Teig basierte kegelförmige Produkt (P) zu enthalten, wobei die genannten Wandpaneele (11-16) ein Substrat aus einem gegenüber Mikrowellen inerten Material und eine Vielzahl von Abschirmungsflicken (30-38) aus einem Mikrowellen abschirmenden Material, welche auf ausgewählten Innenbereichen desselben angeordnet sind, umfassen, wobei das genannte gegenüber Mikrowellen inerte Material des genannten Substrats aus einer Gruppe ausgewählt wird, umfassend Pappematerial und Kunststoffmaterial, **dadurch gekennzeichnet, dass** das gefüllte auf Teig basierte kegelförmige Produkt (P) Folgendes umfasst:
einen unteren Kegelspitzenbereich (P1);
einen oberen Kegelrandbereich (P2); und
eine Füllung mit einem ausgesetzten obersten Zentralbereich (P3),
und dass die genannten Abschirmungsflicken (30-38) Folgendes umfassen:
einen ersten Satz von Abschirmungsflicken (30-34), welche sich auf den genannten Wandpaneelen (11-15) um den genannten unteren Kegelspitzenbereich (P1) des gefüllten auf Teig basierten kegelförmigen Produkts (P) herum befinden und welche eine ausgewählte Abschirmung des unteren Kegelspitzenbereiches (P1) bereitstellen; und
einen zweiten Satz von Abschirmungsflicken (35-38), welche sich auf den Wandpaneelen (11-14) um den genannten oberen Kegelrandbereich (P2) des gefüllten auf Teig basierten kegelförmigen Produkts (P) herum befinden und welche eine ausgewählte Abschirmung des oberen Kegelrandbereiches (P2) bereitstellen und die Erwärmung des genannten ausgesetzten obersten Zentralbereiches (P3) der genannten Füllung des gefüllten auf Teig basierten kegelförmigen Produkts (P) erhöhen,
wobei der genannte erste Satz und der genannte zweite Satz von Abschirmungsflicken (30-34; 35-38) metallisierte Etiketten, welche auf der inneren Oberfläche des genannten Substrats geklebt sind, umfassen.

2. Verpackung nach Anspruch 1, wobei jede der genannten metallisierten Etiketten mindestens eine Schicht aus auf dem Substrat aufgetragenen Aluminiumfolie, oder eine innere Schicht aus auf dem Substrat aufgetragenen Aluminiumfolie und eine äußere Dünnschicht aus einem gegenüber Mikrowellen inerten Material, welches die Aluminiumfolie deckt, oder eine innere Schicht aus Aluminiumfolie, welche zwischen zwei Dünnschichten aus einem gegenüber Mikrowellen inerten Material eingelegt sind, umfasst.

3. Verpackung nach Anspruch 1 oder 2, wobei die genannten Wandpaneele (11-16) eine Vielzahl von seitlichen Wandpaneelen (11-14) oder ein durchgängiges umgebendes seitliches Wandpaneel, mindestens ein unterstes Wandpaneel (15) und mindestens ein oberstes Wandpaneel (16) umfassen, und wobei der genannte erste Satz von Abschirmungsflicken (30-34) eine Vielzahl von unteren seitlichen Abschirmungsflicken (30-33) umfasst, wobei jeder im Wesentlichen einen unteren Bereich eines der genannten seitlichen Wandpaneele (11-14), welche an das genannte unterste Wandpaneel (15) angrenzen, deckt, oder entlang eines unteren Bereichs des genannten durchgängigen umgebenden seitlichen Wandpaneels, welches an das genannte unterste Wandpaneel (15) angrenzt, verteilt sind, und wobei der genannte zweite Satz von Abschirmungsflicken (35-38) eine Vielzahl von oberen seitlichen Abschirmungsflicken (35-38) umfasst, wobei jeder im Wesentlichen einen oberen Bereich eines der genannten seitlichen Wandpaneele (11-14), welche an das genannte oberste Wandpaneel (16) angrenzen, deckt, oder entlang eines oberen Bereichs des genannten durchgängigen umgebenden seitlichen Wandpaneels, welches an das genannte oberste Wandpaneel (16) angrenzt, verteilt sind.

4. Verpackung nach Anspruch 3, wobei die genannten unteren seitlichen Abschirmungsflicken (30-33) und die genannten oberen seitlichen Abschirmungsflicken (35-38) schmale Bandbereiche des seitlichen Wandpaneels (11-14) angrenzend an die Kanten derselben unbedeckt lassen.

5. Verpackung nach Anspruch 3, wobei der genannte erste Satz von Abschirmungsflicken (30-34) mindestens einen untersten Abschirmungsflicken (34) umfasst, welcher mindestens einen Bereich des genannten untersten Wandpaneels (15) deckt.

6. Verpackung nach Anspruch 5, wobei das unterste Wandpaneel (15) einen Schlitz (21) umfasst und der genannte mindestens eine unterste Abschirmungsflicken (34) einen einzigen untersten Abschirmungsflicken (34) mit einer mindestens Teil des genannten Schlitzes (21) umfassenden Einkerbung (22) umfasst oder der genannte mindestens eine unterste Abschirmungsflicken (34) zwei untersten Abschirmungsflicken, welche Raum zwischen denselben im Bereich des Schlitzes lassen, umfasst.

7. Verpackung nach einem der Ansprüche 3 bis 6, wobei die genannten seitlichen Wandpaneele (11-14) eine Anzahl von im Wesentlichen rechteckigen seitlichen Wandpaneelen umfassen, und das genannte unterste Wandpaneel (15) und das genannte oberste Wandpaneel (16) im Wesentlichen polygonal sind und eine Anzahl von Seiten aufweisen, welche der Anzahl von seitlichen Wandpaneelen (11-14) gleich ist.

8. Verpackung nach Anspruch 7, wobei die genannten seitlichen Wandpaneele (11-14) im Wesentlichen rechteckig und drei oder vier sind, und das genannte unterste Wandpaneel (15) und das genannte oberste Wandpaneel (16) jeweils im Wesentlichen dreieckig oder quadratisch sind.

9. Verpackung nach einem der Ansprüche 3 bis 6, wobei die genannten seitlichen Wandpaneele (11-14) ein einziges durchgängiges im Wesentlichen rechteckiges seitliches Wandpaneel umfassen, und das genannte unterste Wandpaneel (15) und das genannte oberste Wandpaneel (16) im Wesentlichen oval oder kreisförmig sind.

10. Einheitlicher Rohling zur Herstellung einer Verpackung mit Feldmodifikatoren zur verbesserten Mikrowellenerwärmung von kegelförmigen Produkten, wobei der genannte einheitliche Rohling (50) ein Substrat aus einem gegenüber Mikrowellen inerten Material umfasst, welches eine Vielzahl von Wandpaneelen (11-16) die miteinander durch Ritzlinien verbunden sind, welche gefaltet werden können, um einen quaderförmigen Container (10) zu bilden, welcher dazu ausgebildet ist, ein gefülltes auf Teig basiertes kegelförmiges Produkt (P) zu enthalten, definiert, und eine Vielzahl von Abschirmungsflicken (30-38) aus einem Mikrowellen abschirmenden Material, welche auf ausgewählten Innenbereichen der genannten Wandpaneele (11-15) angeordnet sind, definiert, wobei das genannte gegenüber Mikrowellen inerte Material des genannten Substrats aus einer Gruppe ausgewählt wird, umfassend Pappematerial und Kunststoffmaterial, **dadurch gekennzeichnet, dass** die genannten Abschirmungsflicken (30-38) Folgendes umfassen:
einen ersten Satz von Abschirmungsflicken (30-34), welche sich auf den genannten Wandpaneelen (11-15) befinden, welche um einen unteren Kegelspitzenbereich (P1) des genannten gefüllten auf Teig basierten kegelförmigen Produkts (P) herum platziert werden sollen, wenn der einheitliche Rohling zum genannten quaderförmigen Container (10) gefaltet ist und das gefüllte auf Teig basierte kegelförmige Produkt (P) im quaderförmigen Container (10) nach Anspruch 1 aufgenommen ist, und dazu ausgebildet sind, den genannten unteren Kegelspitzenbereich (P1) abzuschirmen; und
einen zweiten Satz von Abschirmungsflicken (35-38), welche sich auf den Wandpaneelen (11-14) befinden, welche um einen oberen Kegelrandbereich (P2) des gefüllten auf Teig basierten kegelförmigen Produkts (P) herum platziert werden sollen, wenn der einheitliche Rohling zum genannten quaderförmigen Container (10) gefaltet ist und das gefüllte auf Teig basierte kegelförmige Produkt (P) im quaderförmigen Container (10) nach Anspruch 1 aufgenommen ist, und dazu ausgebildet sind, den genannten oberen Kegelrandbereich (P2) abzuschirmen und die Erwärmung eines ausgesetzten obersten Zentralbereichs (P3) einer Füllung des gefüllten auf Teig basierten kegelförmigen Produkts (P) zu erhöhen,
wobei der genannte erste Satz und der genannte zweite Satz von Abschirmungsflicken (30-34; 35-38) metallisierte Etiketten, welche auf der inneren Oberfläche des genannten Substrats geklebt sind, umfassen.

11. Einheitlicher Rohling nach Anspruch 10, wobei die genannten Wandpaneele (11-16) eine Vielzahl von seitlichen Wandpaneelen (11-14) oder ein durchgängiges umgebendes seitliches Wandpaneel, mindestens ein unterstes Wandpaneel (15) und mindestens ein oberstes Wandpaneel (16) umfassen, und wobei der genannte erste Satz von Abschirmungsflicken (30-34) eine Vielzahl von unteren seitlichen Abschirmungsflicken (30-33) umfasst, wobei jeder im Wesentlichen einen unteren Bereich eines der genannten seitlichen Wandpaneele (11-14), welche an das genannte unterste Wandpaneel (15) angrenzen, deckt, oder entlang eines unteren Bereichs des genannten durchgängigen umgebenden seitlichen Wandpaneels, welches an das unterste Wandpaneel (15) angrenzt, verteilt sind, und wobei der genannte zweite Satz von Abschirmungsflicken (35-38) eine Vielzahl von oberen seitlichen Abschirmungsflicken (35-38) umfasst, wobei jeder im Wesentlichen einen oberen Bereich eines der seitlichen Wandpaneele (11-14), welche an das genannte oberste Wandpaneel (16) angrenzen, deckt, oder entlang eines oberen Bereichs des genannten durchgängigen umgebenden seitlichen Wandpaneels, welches an das genannte oberste Wandpaneel (16) angrenzt, verteilt sind.

12. Einheitlicher Rohling nach Anspruch 11, wobei das genannte Substrat zusätzlich mindestens ein unterstes Hilfswandpaneel (17, 18), mindestens ein oberstes Hilfswandpaneel (19, 20) und eine Vielzahl von Laschen (23, 24, 25, 29), Zungen (28) und Schlitzen (21, 26, 27) definiert, welche dazu ausgebildet sind zusammenzuwirken, um den einheitlichen Rohling (50) mit der Form des quaderförmigen Containers (10) zu halten, sobald es zweckmäßig gefaltet wird.

13. Einheitlicher Rohling nach Anspruch 11, wobei das genannte Substrat aufeinanderfolgende kurze Schnitte umfasst, welche einen leicht zu öffnenden Aufreißstreifen (40) definieren, welcher quer zu mindestens einem der seitlichen Wandpaneele (11-14) verläuft.

14. Einheitlicher Rohling nach einem der Ansprüche 10 bis 13, wobei die genannten seitlichen Wandpaneele (11-14) eine Anzahl von im Wesentlichen rechteckigen seitlichen Wandpaneele umfassen, und das genannte unterste Wandpaneel (15) und das genannte oberste Wandpaneel (16) im Wesentlichen polygonal sind und eine Anzahl von Seiten aufweisen, welche der Anzahl von seitlichen Wandpaneelen (11-14) gleich ist.

15. Einheitlicher Rohling nach einem der Ansprüche 10 bis 13, wobei die genannten seitlichen Wandpaneele (11-14) ein einziges durchgängiges umgebendes im Wesentlichen rechteckiges seitliches Wandpaneel umfassen, und das genannte unterste Wandpaneel (15) und das genannte oberste Wandpaneel (16) im Wesentlichen oval oder kreisförmig sind.

## Revendications

1. Un emballage ayant des modificateurs de champs pour augmenter le chauffage par micro-ondes et un produit en forme de cône ayant une base de pâte garnie contenu dans l'emballage, cet emballage comportant une pluralité de parois (11-16) formant un récipient ayant la forme d'une boîte (10) configuré pour contenir ce produit (P) en forme de cône ayant une base de pâte garnie, ces parois (11-16) comportant un substrat fait en un matériau inerte aux micro-ondes et une pluralité de patches de protection (30-38) fabriqués en du matériau de protection contre les micro-ondes disposés sur ses régions intérieures sélectionnées, dans lequel ce matériau inerte aux micro-ondes de ce substrat est sélectionné d'un groupe comprenant un matériau en carton et un matériau en plastique, **caractérisé en ce que** le produit (P) en forme de cône ayant une base de pâte garnie comprend:
une région de sommet du cône inférieure (P1);
une région de rebord de cône supérieure (P2); et
une garniture ayant une région (P3) supérieure centrale exposée.
et **en ce que** ces patches de protection (30-38) comprennent:
un premier ensemble de patches de protection (30-34) situés sur ces parois (11-15) autour de cette région (P1) de sommet de cône inférieure du produit (P) en forme de cône ayant une base de pâte garnie et fournissant une protection sélectionnée de la région (P1) de sommet de cône inférieure; et
un deuxième ensemble de patches de protection (35-38) situés sur les parois (11-14) autour de cette région (P2) de rebord de cône supérieure du produit (P) en forme de cône ayant une base de pâte garnie et fournissant une protection sélectionnée de la région (P2) de rebord de cône supérieure et augmentant le chauffage de cette région (P3) supérieure centrale exposée de cette garniture du produit (P) en forme de cône ayant une base de pâte garnie.
ces premier et deuxième ensembles de patches de protection (30-34; 35-38) comportant des étiquettes métallisées collées sur une surface intérieure de ce substrat.

2. L'emballage conformément à la revendication 1, dans lequel chacune de ces étiquettes métallisées comporte au moins une couche faite en un film aluminium appliqué sur le substrat, ou une couche intérieure faite en film aluminium appliqué sur le substrat et une fine couche extérieure faite en matériau inerte aux micro-ondes couvrant le film aluminium , ou une couche intérieure faite en film aluminium prise en sandwich entre deux couches fines faites en un matériau inerte aux micro-ondes.

3. L'emballage conformément à 1 ou 2, dans lequel ces parois (11-16) comportent une pluralité de parois latérales (11-14) ou une paroi continue enveloppant au moins une paroi de fond (15) et au moins une paroi supérieure (16) et dans lequel ce premier ensemble de patches de protection (30-34) comporte une pluralité de patches de protection latéraux inférieurs (30-33), chacun couvrant sensiblement une région inférieure d'une de ces parois latérales (11-14) adjacente à cette paroi de fond (15) ou distribués le long d'une région inférieure de cette paroi continue enveloppant la paroi latérale adjacente à cette paroi de fond (15) et ce deuxième ensemble de patches de protection (35-38) comporte une pluralité de patches de protection latéraux supérieurs (35-38), chacun couvrant sensiblement une région supérieure d'une des parois latérales (11-14) adjacente à cette paroi supérieure (16) ou distribués le long d'une région supérieure de cette paroi continue enveloppant la paroi latérale adjacente à cette paroi supérieure (16).

4. L'emballage conformément à la revendication 3, dans lequel ces patches de protection latéraux inférieurs (30-33) et ces patches de protection latéraux supérieurs (35-38) laissent des régions en bande étroite de la paroi latérale (11-14) adjacentes à leurs bords non couverts.

5. L'emballage conformément à la revendication 3, dans lequel ce premier ensemble de patches de protection (30-34) comportent au moins un patch de protection inférieur (34) couvrant au moins une région de cette paroi inférieure (15).

6. L'emballage conformément à la revendication 5, dans lequel la paroi de fond (15) comporte une fente (21) et cet au moins un patch de protection de fond (34) comporte un seul patch de protection de fond (34) ayant une entaille (22) entourant au moins une partie de cette fente (21) ou cet au moins un patch de protection de fond (34) comporte deux patches de protection de fond laissant un espace entre eux dans la région de la fente.

7. L'emballage conformément à une quelconque des revendications 3 à 6, dans lequel ces parois latérales (11-14) comportent un certain nombre de parois latérales sensiblement rectangulaires et ces parois de fond et supérieure (15-16) sont sensiblement polygonales et ont un certain nombre de côtés égal au nombre de parois latérales (11-14).

8. L'emballage conformément à la revendication 7 dans lequel ces parois latérales (11-14) sont sensiblement rectangulaires et en nombre de trois ou quatre, et ces parois de fond et supérieure (15, 16) sont sensiblement triangulaires ou carrées, respectivement.

9. L'emballage conformément à une quelconque des revendications 3 à 6, dans lequel ces parois latérales (11-14) comportent une seule paroi latérale continue sensiblement rectangulaire et ces parois de fond et supérieure (15,16) sont sensiblement ovales ou circulaires.

10. Une ébauche unitaire pour fabriquer des emballages ayant des modificateurs de champs pour augmenter le chauffage en micro-ondes de produits en forme de cône, cette ébauche unitaire (50) comportant un substrat fait en matériau inerte aux micro-ondes définissant une pluralité de parois (11-16) reliées entre elles par des lignes de repère pouvant être pliées pour former un récipient en forme de boîte (10) configuré pour contenir un produit (P) en forme de cône ayant une base de pâte garnie et une pluralité de patches de protection (30-38) faits en matériau de protection aux micro-ondes disposé sur des régions intérieures sélectionnées de ces parois (11-15), dans laquelle ce matériau inerte aux micro-ondes de ce substrat est sélectionné d'un groupe comprenant du matériau en carton et du matériau en plastique, **caractérisée en ce que** ces patches de protection (30-38) comportent:
un premier ensemble de patches de protection (30-34) situé sur ces parois (11-15) pour être positionnés autour d'une région (P1) de sommet du cône inférieure de ce produit (P) en forme de cône ayant une base de pâte garnie lorsque l'ébauche unitaire est pliée en ce récipient en forme de boîte (10) et le produit (P) en forme de cône ayant une base de pâte garnie est logé dans le récipient en forme de boîte (10) conformément à la revendication 1, et configuré pour protéger cette région (P1) de sommet du cône inférieure; et
un deuxième ensemble de patches de protection (35-38) situé sur ces parois (11-14) pour être positionnés autour d'une région (P2) de sommet de rebord du cône supérieure de ce produit (P) en forme de cône ayant une base de pâte garnie lorsque l'ébauche unitaire es pliée en ce récipient en forme de boîte (10) et le produit (P) en forme de cône ayant une base de pâte garnie est logé dans le récipient en forme de boîte (10) conformément à la revendication 1, et configuré pour protéger cette région (P1) de rebord du cône supérieure (P2) et augmenter le chauffage d'une région (P3) centrale supérieure exposée d'un produit (P) en forme de cône ayant une base de pâte garnie;
ces premier et deuxième ensembles de patches de protection (30-34; 35-38) comprenant des étiquettes métallisées collées sur une surface intérieure de ce substrat.

11. L'ébauche unitaire conformément à la revendication 10, dans laquelle ces parois (11-16) comportent une pluralité de parois latérales (11-14) ou une paroi latérale continue enveloppant, au moins une paroi de fond (15) et au moins une paroi supérieure (16) et dans laquelle ce premier ensemble de patches de protection (30-34) comportent une pluralité de patches de protection latéraux inférieurs (30-33), chacun couvrant sensiblement une région inférieure d'une de ces parois latérales (11-14) adjacentes à cette parois de fond (15), ou distribués le long d'une région inférieure de cette paroi continue enveloppant la paroi latérale adjacente à la paroi de fond (15) et ce deuxième ensemble de patches de protection (35-38) comporte une pluralité de patches de protection latéraux supérieurs (35-38), chacun couvrant sensiblement une région supérieure d'une des parois latérales (11-14) adjacente à cette paroi supérieure (16) ou distribués le long d'une région supérieur de cette paroi adjacente latérale continue enveloppant la paroi latérale adjacente à cette paroi supérieure (16).

12. L'ébauche unitaire conformément à la revendication 11, dans laquelle ce substrat définit en plus au moins une paroi de fond auxiliaire (17, 18), au moins une paroi supérieure auxiliaire (19, 20) et une pluralité de rabats (23,24,25,29), de languettes (28) et de fentes (21, 26, 27) configurées pour agir entre elles pour retenir l'ébauche unitaire (50) en la forme du récipient en forme de boîte (10) lorsqu'elle est convenablement pliée.

13. L'ébauche unitaire conformément à la revendication 11, dans laquelle ce substrat comporte des coupes courtes successives définissant une bande qui ouvre facilement lorsqu'on la tire (40) longeant transversalement au moins une des parois latérales (11-14).

14. L'ébauche unitaire conformément à une quelconque des revendications 10 à 13, dans laquelle ces parois latérales (11-14) comportent un certain nombre de parois latérales sensiblement rectangulaires, et ces parois de fond et supérieure (15-16) son sensiblement polygonales et ont un certain nombre de côté égal au nombre de parois latérales (11-14).

15. L'ébauche unitaire conformément à une quelconque des revendications 10 à 13, dans laquelle ces parois latérales (11-14) comportent une seule paroi sensiblement rectangulaire enveloppant la paroi latérale sensiblement rectangulaire et ces parois de fond et supérieure (15, 16) sont sensiblement ovales ou circulaires.
